# EUROPÄISCHE PATENTANMELDUNG

(11) **EP 1 818 310 A1**
(43) Veröffentlichungstag der Anmeldung: **15.08.2007**
(21) Anmeldenummer: 07001993.0
(22) Anmeldetag: 30.01.2007
(51) Int. Cl.: C01B 31/18, C01B 3/50

(54) **Verfahren zur Erzeugung von Kohlenmonoxid aus Synthesegas**

(30) Priorität: 10.02.2006 DE 102006006281
(71) Anmelder: Linde Aktiengesellschaft, 65189 Wiesbaden (DE)
(72) Erfinder: Klein, Harald, Dr., 82515 Wolfratshausen (DE); Lang, Martin, 80804 München (DE); Masek, Pavel, Dr., 81477 München (DE)

(57) **Zusammenfassung**

Die Erfindung betrifft ein Verfahren zur Erzeugung von Kohlenmonoxid, wobei in einer Konversionsstufe (DR) aus einem Kohlenwasserstoffe enthaltenden Einsatz (1,2) sowie Wasserdampf oder/und Kohlendioxid (CO₂) ein Kohlenmonoxid (CO), Wasserstoff (H₂) und Methan (CH₄) enthaltendes Synthesegas (3) erzeugt wird, welches anschließend einer Zerlegungseinrichtung (Z) zur Abtrennung von zumindest einer wasserstoff- (7,9) und einer methanreichen Fraktion (10) sowie eines Kohlenmonoxidproduktes (6) zugeführt wird. Die in der Zerlegungseinrichtung (Z) abgetrennte methanreiche Fraktion (10) wird als Einsatz (M-Einsatz) vor die Konversionsstufe (DR) zurückgeführt.

## Beschreibung

Die Erfindung betrifft ein Verfahren zur Erzeugung von Kohlenmonoxid, wobei in einer Konversionsstufe aus einem Kohlenwasserstoffe enthaltenden Einsatz sowie Wasserdampf oder/und Kohlendioxid (CO₂) ein Kohlenmonoxid (CO), Wasserstoff (H₂) und Methan (CH₄) enthaltendes Synthesegas erzeugt wird, welches anschließend einer Zerlegungseinrichtung zur Abtrennung von zumindest einer wasserstoff- und einer methanreichen Fraktion sowie eines Kohlenmonoxidproduktes zugeführt wird.

Neben Wasserstoff (H₂) ist Kohlenmonoxid (CO) der kleinste reaktive Baustein zur Synthese organischer Chemikalien, insbesondere vieler großtechnisch erzeugter Produkte. Rohstoffquellen für CO sind Synthesegase, wie sie bei der Vergasung von Steinkohle, der Verschwelung von Braunkohle oder der Spaltung von Kohlenwasserstoffen mittels Wasserdampf und/oder Kohlendioxid (CO₂) entstehen. Um ein CO-Produkt zu gewinnen, werden die neben CO in einem Synthesegas enthaltenen Stoffe, wie beispielsweise H₂, CO₂ oder Methan (CH₄), in einer Zerlegungseinrichtung vom CO abgetrennt und vorzugsweise einer wirtschaftlichen Nutzung zugeführt.

Wird das CO-haltige Synthesegas durch die Spaltung leichter Kohlenwasserstoffe hergestellt, enthält es neben Kohlenmonoxid auch größere Mengen Wasserstoff. Besonders dann, wenn die leichten Kohlenwasserstoffe einer katalytischen Dampfreformierung unterzogen werden, ist das Verhältnis von Wasserstoff zu Kohlendioxid (H₂/CO-Verhältnis) im Synthesegas hoch, und kann einen Wert von 3 erreichen, wenn es sich bei den leichten Kohlenwasserstoffen um Erdgas handelt.

Ist es nicht möglich, den als Nebenprodukt bei der CO-Gewinnung erzeugten Wasserstoff einer wirtschaftlichen Nutzung zuzuführen, wird nach dem Stand der Technik das aus dem Synthesegas ausgewaschene Kohlendioxid vor den Dampfreformer zurückgeführt, wo es zumindest einen Teil des benötigten Wasserdampfes ersetzt. Aufgrund der folgenden Gleichung verschiebt sich dadurch das Reaktionsgleichgewicht in Richtung Kohlenmonoxid:

CO₂+ H₂ ⇔ CO + H₂O

wodurch das H₂/CO-Verhältnis auf ca. 2,5 reduziert werden kann. Falls es nicht möglich ist, dem Prozess von jenseits der Anlagengrenzen weiteres Kohlendioxid zuzuführen, muss aus dem anfallenden Wasserstoff ein wirtschaftlich verwertbares Produkt hergestellt werden, da sonst die Gesamtökonomie des Verfahrens in Frage steht. Ist es nicht möglich, den Wasserstoff anders zu verwenden (z. B. zu Synthesezwecken), wird er nach dem Stand der Technik als Brennstoff, beispielsweise zur Befeuerung des Dampfreformers, eingesetzt.

Ebenfalls Stand der Technik ist es, das aus dem Synthesegas abgetrennte Methan zur Befeuerung des Dampfreformers zu verwenden. Da weniger Wasserstoff zur Unterfeuerung im Dampfreformer benötigt wird, erhöht sich jedoch das H₂/CO-Verhältnis an der Anlagengrenze und somit auch die Wasserstoffmenge, die als Nebenprodukt abgegeben werden muss.

Aufgabe der vorliegenden Erfindung ist es daher, ein Verfahren der eingangs genannten Art anzugeben, durch das die als Nebenprodukt anfallende Wasserstoffmenge im Vergleich zum Stand der Technik verringert und die Wirtschaftlichkeit der Kohlenmonoxiderzeugung erhöht wird.

Diese Aufgabe wird erfindungsgemäß dadurch gelöst, dass die in der Zerlegungseinrichtung abgetrennte methanreiche Fraktion als Einsatz (M-Einsatz) der Konversionsstufe an geeigneter Stelle zugeführt wird.

Wird der Konversionsstufe Erdgas als kohlenwasserstoffhaltiger Einsatz zugeführt, so wird der M-Einsatz zweckmäßigerweise dem Erdgas-Einsatz zugemischt, gemeinsam mit diesem weitergeleitet und zu Synthesegas umgesetzt.

Ist der Druck der in die Konversionsstufe eintretenden Einsatzstoffe höher als der Druck der aus der Zerlegungseinheit austretenden methanreichen Fraktion, so ist es notwendig, den Druck der methanreichen Fraktion anzuheben, um sie als M-Einsatz vor die Konvertierungsstufe zurückführen zu können. Eine Ausgestaltung des erfindungsgemäßen Verfahrens sieht vor, dass die für die Rückführung notwendige Druckerhöhung der methanreichen Fraktion mittels eines eigenen Methan-Rückführverdichters durchgeführt wird.

Wird, um die CO-Ausbeute zu erhöhen, aus dem Synthesegas abgetrenntes CO₂ mittels eines CO₂-Rückführverdichter vor die Konvertierungsstufe zurückgeführt, so sieht eine andere Ausgestaltung des erfindungsgemäßen Verfahrens vor, dass die methanreiche Fraktion aus dem Zerlegungsteil dem CO₂-Strom zugemischt, gemeinsam mit diesem im CO₂-Rückführverdichter verdichtet und als M-Einsatz vor die Konvertierungsstufe zurückgeführt wird.

Eine Variante des erfindungsgemäßen Verfahrens sieht vor, dass als Zerlegungseinrichtung für die Abtrennung des CO-Produktes aus dem Synthesegas eine kryogene Methanwäsche - wie sie aus dem Stand der Technik hinlänglich bekannt ist - eingesetzt wird. In einer Methanwäsche wird das im Synthesegas enthaltene Methan mittels Rektifikation abgetrennt und als Waschmittel für die CH₄-Waschkolonne genutzt. Dazu wird das flüssige CH₄ mit Hilfe einer Pumpe auf Druck gebracht. Zweckmäßigerweise wird zumindest ein Teil des überschüssigen CH₄ unter Druck verdampft, angewärmt und als M-Einsatz vor die Konversionsstufe zurückgeführt. Die Druckerhöhung wird dabei so groß gewählt, dass ausreichend Druckgefälle für die Rückführung zur Verfügung steht. Auf einen Methan-Rückverdichter kann bei dieser Verfahrensvariante verzichtet werden. Um die Löslichkeit des Synthesegases während der Abkühlung und Kondensation bezüglich Spurenkomponenten zu erhöhen, sieht eine Ausgestaltung dieser Verfahrensvariante vor, dass ein kleiner Teil der unter Druck gewonnenen CH₄-Fraktion vor die Zerlegungseinrichtung zurückgeführt und in das Synthesegas eingeleitet wird.

Der Wegfall der methanreichen Fraktion aus der Zerlegungseinrichtung als Brennstoff - beispielsweise zur Befeuerung eines als Konvertierungsstufe eingesetzten Dampfreformers - wird erfindungsgemäß zumindest durch einen Teil der überschüssigen Menge der in der Zerlegungseinrichtung vom Synthesegas abgetrennten Wasserstofffraktion gedeckt, wodurch die Menge des an der Anlagengrenze abzugebenden Wasserstoffs sinkt. Zweckmäßigerweise wird Rohwasserstoff, d. h. Wasserstoff, der keine Produktqualität aufweist, anstelle der methanreichen Fraktion als Brennstoff eingesetzt.

Durch die Rückführung der methanreichen Fraktion aus der Zerlegungseinheit als M-Einsatz vor die Konvertierungsstufe, wird im Vergleich zum Stand der Technik weniger kohlenwasserstoffhaltiger Einsatz benötigt, um eine vorgegebene Menge an Kohlenmonoxidprodukt zu erzeugen. Dieser Sachverhalt sei am Beispiel einer Anlage zur Produktion von 10.000m_{N}³/h Kohlenmonoxid aufgezeigt, in welcher Erdgas in einem von außen befeuerten Dampfreformer zu Synthesegas umgesetzt wird. Die in der Zerlegungseinrichtung abgetrennte Wasserstoffmenge wird in der Tabelle als Roh-H₂ bezeichnet. Alle Angaben in der Tabelle verstehen sich als Mengenströme in m_{N}³/h.

| | Roh-H₂ nicht als Brennstoff genutzt | Roh-H₂ max. als Brennstoff genutzt | Roh-H₂ max. als Brennstoff genutzt; CH₄-Rückführung |
|---|---|---|---|
| Erdgas als Einsatz | 11.084 | 11.084 | 9.195 |
| Roh-H₂ | 29.177 | 16.089 | 9.718 |
| Erdgas als Brennstoff | 2.318 | 0 | 0 |
| Roh-H₂ als Brennstoff | 0 | 12.745 | 19.828 |

Aus der Tabelle ist zu ersehen, dass die Rückführung der methanreichen Fraktion aus der Zerlegungseinheit als M-Einsatz zum Dampfreformer neben einer Erhöhung der maximal zur Befeuerung des Dampfreformers verwendbaren Wasserstoffmenge auch eine erhebliche Einsparung an Erdgaseinsatz bewirkt. Durch beide Effekte wird die Wirtschaftlichkeit der Kohlenmonoxidproduktion deutlich gesteigert.

Obwohl bei der Produktion von Kohlenmonoxid die Umsetzung der leichten Kohlenwasserstoffe in der Regel ohne Luft erfolgt, können Substanzen wie Stickstoff und Argon über die kohlenwasserstoffhaltigen Einsätze in das Synthesegas und letztlich auch in das CO-Produkt gelangen. Um die gewünschte CO-Produktreinheit zu erreichen, muss in diesem Fall in der Regel ein apparativer und energetischer Aufwand getrieben werden, der überproportional zur angestrebten Reinheit ansteigt. Häufig wird daher auf die Stickstoff/Argon-Abtrennung verzichtet und eine geringere Reinheit des CO-Produktes, der dann von der Höhe der Stickstoff- und Argonanteile im kohlenwasserstoffhaltigen Einsatz bestimmt wird, in Kauf genommen.

Im Vergleich zum Stand der Technik werden bei der Anwendung des erfindungsgemäßen Verfahrens weniger Stickstoff und Argon in den Prozess eingebracht, da das als M-Einsatz vor die Konversionsstufe zurückgeführte Methan in der Regel arm an Stickstoff und Argon ist. Aus diesem Grund steigt die Reinheit des CO-Produktes um 0,5 bis 1% auch ohne die Anwendung spezieller Verfahren zur Abtrennung von Stickstoff- und Argon aus dem CO-Produkt.

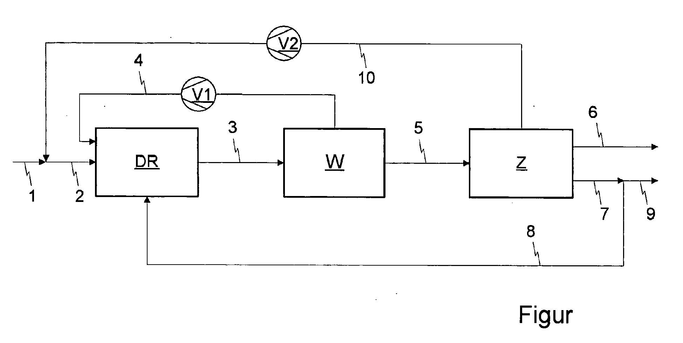

Im Folgenden soll die Erfindung anhand eines in der Figur schematisch dargestellten Ausführungsbeispiels näher erläutert werden:

Das vorliegende Ausführungsbeispiel betrifft eine Anlage, in der durch Dampfspaltung in einem von außen befeuerten Dampfreformer und anschließende kryogene Stofftrennung aus einem methanhaltigen Einsatz (Erdgas) ein Kohlenmonoxidprodukt gewonnen wird.

Über die Leitungen 1 und 2 wird Erdgas, das in vorangegangenen Schritten (nicht abgebildet) von störenden Verunreinigungen (z. B. Schwefelwasserstoff) befreit und mit Wasserdampf vermischt wurde, in den Dampfreformer DR eingeleitet. Im Dampfreformer DR entsteht aus dem Einsatz ein Synthesegas, das neben Kohlenmonoxid, Wasserstoff und Methan auch Kohlendioxid und Wasser enthält, und das über Leitung 3 zur Kohlendioxidwäsche W weitergeführt wird. In der Kohlendioxidwäsche W wird das Synthesegas weitgehend von Kohlendioxid gereinigt. Das in der Kohlendioxidwäsche W aus dem Synthesegas abgetrennte Kohlendioxid wird über Leitung 4 und den Verdichter V1 zurückgeführt und in die Dampfreformierung DR eingeleitet, was eine Erhöhung des Kohlenmonoxidanteils im Synthesegas 3 zur Folge hat. Aus der Kohlendioxidwäsche W wird das von Kohlendioxid befreite Synthesegas über Leitung 5 in die kryogene Zerlegungseinheit Z geleitet, wo aus dem Synthesegas neben einem Kohlenmonoxidprodukt, das über Leitung 6 weitergeführt wird, auch eine wasserstoff- 7 und eine methanreiche Fraktion 10 gewonnen. Ein Teil der wasserstoffreichen Fraktion 7 wird über Leitung 9 weitergeführt, während ein anderer Teil 8 als Brennstoff zum Dampfreformer DR geleitet wird und dort zur Gänze den Bedarf an Heizenergie deckt. Die methanreiche Fraktion 10 wird mittels des Verdichters V2 vor den Dampfreformer DR zurückgeführt und über Leitung 2 gemeinsam mit dem Erdgas/Wasserdampfgemisch 1 in den Dampfreformer DR eingeleitet.

## Patentansprüche

1. Verfahren zur Erzeugung von Kohlenmonoxid, wobei in einer Konversionsstufe aus einem Kohlenwasserstoffe enthaltenden Einsatz sowie Wasserdampf oder/und Kohlendioxid (CO₂) ein Kohlenmonoxid (CO), Wasserstoff (H₂) und Methan (CH₄) enthaltendes Synthesegas erzeugt wird, welches anschließend einer Zerlegungseinrichtung zur Abtrennung von zumindest einer wasserstoff- und einer methanreichen Fraktion sowie eines Kohlenmonoxidproduktes zugeführt wird, **dadurch gekennzeichnet, dass** die in der Zerlegungseinrichtung (Z) abgetrennte methanreiche Fraktion (10) als Einsatz (M-Einsatz) der Konversionsstufe (DR) zugeführt wird.

2. Verfahren nach Anspruch 1, **dadurch gekennzeichnet, dass** aus dem Synthesegas (3) abgetrenntes CO₂ (4) mittels eines CO₂-Rückverdichters (V1) vor die Konversionsstufe (DR) zurückgeführt wird.

3. Verfahren nach einem der Ansprüche 1 oder 2, **dadurch gekennzeichnet, dass** zur Abtrennung des Kohlenmonoxidprodukts (6) aus dem Synthesegas (5) eine Methanwäsche eingesetzt wird.

4. Verfahren nach einem der Ansprüche 1 bis 3, **dadurch gekennzeichnet, dass** die Zurückführung der Methanfraktion (10) vor die Konversionsstufe (DR) mittel eines Methan-Rückverdichters (V2) durchgeführt wird.

5. Verfahren nach Anspruch 2, **dadurch gekennzeichnet, dass** die Zurückführung der Methanfraktion (10) als M-Einsatz vor die Konversionsstufe (DR) mittel des CO₂-Rückverdichters (V1) durchgeführt wird.

6. Verfahren nach Anspruch 3, **dadurch gekennzeichnet, dass** zumindest eine Teilmenge des überschüssigen flüssigen Methans innerhalb der Methanwäsche durch Wärmezufuhr und unter Druck verdampft und als M-Einsatz (10) vor die Konversionsstufe (DR) zurückgeführt wird, wobei die Druckerhöhung so groß ist, dass allein aufgrund des sich ausbildenden Druckgefälles der M-Einsatz (10) zur Eintrittseite der Konversionsstufe (DR) zurückströmt.

7. Verfahren nach einem der Ansprüche 1 bis 6, **dadurch gekennzeichnet, dass** zur Synthesegaserzeugung eine von außen befeuerte Konversionsstufe (DR) eingesetzt wird.

8. Verfahren nach einem der Ansprüche 1 bis 7, **dadurch gekennzeichnet, dass** zumindest einen Teil (8) der wasserstoffreichen Fraktion (7) aus der Zerlegungseinheit (Z) zur Deckung des dortigen Brennstoffbedarfs in die Konversionsstufe (DR) zurückgeführt wird.
